# EUROPÄISCHE PATENTSCHRIFT

(11) **EP 2 656 461 B1**
(45) Veröffentlichungstag und Bekanntmachung des Hinweises auf die Patenterteilung: **09.01.2019**
(21) Anmeldenummer: 11790748.5
(22) Anmeldetag: 23.11.2011
(51) Int. Cl.: H02G 3/38

(54) **TROCKENBAUWAND**
DRYWALL
PAROI DE CONSTRUCTION SÈCHE

(30) Priorität: 23.12.2010 DE 202010013208 U
(43) Veröffentlichungstag der Anmeldung: 30.10.2013
(73) Patentinhaber: Knauf Gips KG, 97346 Iphofen (DE)
(72) Erfinder: FLORENSKE, Oliver, 59519 Möhnesee (DE); MITTNACHT, Sebastian, 97074 Würzburg (DE); VIEBAHN, Michael, 97346 Iphofen (DE)
(74) Vertreter: Nunnenkamp, Jörg
(86) Internationale Anmeldenummer: PCT/EP2011/070765
(87) Internationale Veröffentlichungsnummer: WO 2012/084387

(56) Entgegenhaltungen:
- WO-A1-2009/098067
- WO-A1-2009/153674

## Beschreibung

Die Erfindung betrifft eine Trockenbauwand, mit einer Beplankung aus einer oder mehreren Dämmplatten und wenigstens einem in diese Beplankung integrierten Systemeinsatz zur Aufnahme elektrischer Funktionselemente, und mit mindestens einem elektrischen Funktionselement, wobei der Systemeinsatz mit zumindest einer Seitenwand zum Anschluss der einen oder der mehreren Dämmplatten ausgerüstet ist, wobei ferner der Systemeinsatz eine Bodenwand aufweist, welche zum Anschluss an eine Rahmenkonstruktion ausgebildet ist, und wobei der Systemeinsatz als Systemkanal mit zwei sich gegenüberliegenden Seitenwänden ausgebildet ist.

Eine Trockenbauwand bezeichnet wie üblich eine Wand, die durch die sogenannte Trockenbauweise unter Verzicht auf wasserhaltige Baustoffe wie Beton oder Putz errichtet wird. Dabei handelt es sich im Rahmen der vorliegenden Anmeldung bei einer solchen Trockenbauwand sowohl um eine Deckenbekleidung bzw. Unterdecke als auch eine Wandbekleidung und schließlich einen Trockenunterboden bzw. Hohlraumboden, der wie beschrieben aufgebaut ist. Dabei wird meistens zunächst eine Rahmenkonstruktion und hier ein Metallständerwerk errichtet, an welchem typischerweise die Dämmplatten festgelegt werden. Hierbei kann es sich um Gipskartonplatten, Gipsfaserplatten, Holzwerkzeugplatten etc. handeln. Auch zusätzliche Beläge, wie beispielsweise Tapeten, Trockenputze, Anstriche aber auch Bodenbeläge wie Linoleum, Parkett, Teppichboden etc. können als Abschluss aufgebracht werden.

Trockenbauwände zeichnen sich durch eine große Flexibilität und kostengünstige Herstellung aus. Dabei versucht man insgesamt soviel wie möglich standardisierte Komponenten einzusetzen. Da Trockenbauwände oftmals dahinter befindliche Installationen verbergen, werden im Stand der Technik nach der DE 20 2004 014 587 U1 bereits Bestrebungen verfolgt, u. a. Leitungskanäle z. B. mit Hilfe einer Revisionsvorrichtung in die Beplankung zu integrieren. Auf diese Weise lassen sich beispielsweise Steckdosen, oder andere Leitungsabgriffe flexibel und optisch ansprechend in solchen Trockenbauwänden unterbringen.

Daneben ist unter anderem ein modulares Bausystem nach der DE 10 2005 006 223 A1 bekannt, bei welchem einzelne Bauteile modular unter Verwendung von mörtellosen Verbindungselementen miteinander gekoppelt werden. - Der bisher beschriebene Stand der Technik stößt dann an Grenzen, wenn eine universell einsetzbare Trockenbauwand mit in die Beplankung integriertem Systemeinsatz zur Verfügung gestellt werden soll. Denn solche Trockenbauwände unterscheiden sich in der Praxis je nach den bauphysikalischen oder brandschutztechnischen Anforderungen in ihrer Beplankungsstärke. Bei der bekannten Lösung nach dem Stand der Technik entsprechend der DE 20 2004 014 587 U1 muss hierzu jeweils ein eigener Systemeinsatz angefertigt werden, welcher an die realisierte Beplankungsstärke angepasst ist. Das ist vor dem Hintergrund einer vereinfachten Lagerhaltung und zur Reduzierung der Kosten nachteilig.

Im Rahmen der WO 2009/098067 A1 wird eine Profilleistenvorrichtung beschrieben, die mit einer ersten Profilleiste und einer zweiten Profilleiste ausgerüstet ist. Die zweite Profilleiste greift mit wenigstens einem Befestigungskopf in zumindest eine Aufnahme an der ersten Profilleiste ein. Außerdem wird in diesem Zusammenhang eine Revisionsvorrichtung offenbart, bei welcher das Rahmenprofil des Revisionsrahmens und/oder des Revisionsdeckels aus einer entsprechenden Profilleistenvorrichtung hergestellt ist.

Im Rahmen des gattungsbildenden Standes der Technik entsprechend der WO 2009/153674 A1 geht es um eine Rahmenkonstruktion in Verbindung mit einer Verkleidung. Im Zusammenhang mit der Rahmenkonstruktion kommt auch ein Systemeinsatz zum Einsatz, an den einzelne Platten angeschlossen werden können.

Der Erfindung liegt das technische Problem zugrunde, eine derartige Trockenbauwand so weiterzuentwickeln, dass ein variabler Einsatz möglich ist und die Anzahl der erforderlichen Bauteile zur Berücksichtigung unterschiedlicher Beplankungsstärken eine Verringerung erfährt.

Zur Lösung dieser technischen Problemstellung ist eine gattungsgemäße Trockenbauwand im Rahmen der Erfindung dadurch gekennzeichnet, dass die Dämmplatte unter Zwischenschaltung einer mit einem Befestigungskopf in eine Aufnahme der Seitenwand eingreifenden Profilleiste an den Systemeinsatz angeschlossen ist, wobei das Funktionselement ein Gehäuse aufweist, welches mit dem Systemeinsatz wärmeleitend dadurch verbunden ist, dass das Gehäuse und der Systemeinsatz dicht an dicht mechanisch aneinander anliegen.

Im Rahmen der Erfindung ist der Systemeinsatz im Allgemeinen mit seiner jeweiligen Seitenwand in etwa bündig und kantenfrei in einer Ausnehmung der Beplankung platziert. Meistens verfügt der Systemeinsatz über zwei oder vier Seitenwände. Die jeweilige Seitenwand schließt dabei in etwa bündig mit ihrer kopfseitigen Kante mit der Oberseite der Beplankung ab. Das erfolgt kantenfrei. Das heißt, im Gegensatz zum Stand der Technik benötigt der erfindungsgemäß modifizierte Systemeinsatz keine die Beplankung übergreifende Kante. Vielmehr fungiert die in die Aufnahme der Seitenwand mit ihrem Befestigungskopf eingreifende Profilleiste als Auflager für die eine oder die mehreren Dämmplatten, welche die Beplankung definieren.

Erfindungsgemäß handelt es sich bei dem Systemeinsatz um einen Systemkanal mit zwei sich gegenüberliegenden Seitenwänden. Dieser Systemkanal erstreckt sich regelmäßig über die gesamte Länge der erfindungsgemäßen Trockenbauwand von einem bis zum anderen Ende. Das ist selbstverständlich nicht zwingend, weil im Rahmen der Erfindung auch rechteckförmige Systemeinsätze mit insgesamt vier die Rechteckform definierenden Seitenwänden umfasst werden.

Der Systemeinsatz weist eine Bodenwand auf. Diese Bodenwand ist rechtwinklig an die Seitenwände angeschlossen bzw. die Seitenwände stehen meistens senkrecht auf der Bodenwand auf. Die Bodenwand selbst mag mit Durchbrechungen ausgerüstet sein, um elektrische Verbindungskabel oder andere Verbindungselemente vom Hohlraum hinter der Trockenbauwand in den Bereich des Systemeinsatzes führen zu können.

Die Bodenwand des Systemeinsatzes ist im Allgemeinen zum Anschluss an eine Rahmenkonstruktion eingerichtet. Zu diesem Zweck mag der Systemeinsatz ein angeschlossenes Profil, insbesondere C-Profil aufweisen. Ein solches C-Profil dient typischerweise zur unmittelbaren Kopplung mit der Rahmenkonstruktion. Dabei ist das Profil bzw. C-Profil im Allgemeinen an der Bodenwand des Systemeinsatzes vorgesehen bzw. bildet ein Basisschenkel des Profils respektive C-Profils zugleich die Bodenwand des Systemeinsatzes.

Solche Profile bzw. C-Profile werden als Metallprofile typischerweise für die Unterkonstruktion respektive die Rahmenkonstruktion zur Anbringung der Dämmplatten eingesetzt. Tatsächlich setzt sich die Rahmenkonstruktion im Allgemeinen aus C-förmigen und an Decke und Boden angebrachten Stahlblechprofilen bestimmter und vorgegebener Breiten zusammen. Neben solchen C-förmigen und senkrecht verlaufenden Metallprofilen kommen darüber hinaus waagerecht an Decke und Boden angebrachte U-förmige Stahlblechprofile ebenfalls vorgegebenen Breitenspektrums zum Einsatz. Jedenfalls ist der Systemeinsatz mit einem angeschlossenen Profil und hier insbesondere einem C-Profil ausgerüstet, um den Systemeinsatz unmittelbar mit der Rahmenkonstruktion koppeln zu können. Zu diesem Zweck mögen in das Profil bzw. C-Profil ein oder mehrere Anschlusselemente eingreifen, die für die erforderliche unmittelbare Kopplung mit der Rahmenkonstruktion sorgen.

Der Systemeinsatz selbst ist vorteilhaft aus metallischen Profilen und hier insbesondere metallischen Strangpressprofilen aufgebaut. Beispielsweise mag es sich um Aluminiumprofile handeln, die ein geringes Gewicht aufweisen und folglich für den beschriebenen Einsatzzweck besonders prädestiniert sind.

Wie bereits erläutert, wird der Systemeinsatz mit seinen Seitenwänden in etwa bündig und kantenfrei in der Ausnehmung der Beplankung aufgenommen. Die mit den Befestigungskopf ausgerüstete und in die Aufnahme der jeweiligen Seitenwand eingreifende Profilleiste fungiert als Auflager für die eine oder die mehreren Dämmplatten zur Realisierung der Beplankung. Um nun unterschiedliche Beplankungsstärken ausgleichen und im Rahmen der Erfindung berücksichtigen zu können, ist die Seitenwand vorteilhaft mit mehreren Aufnahmen zur positionsveränderlichen Festlegung der Profilleiste ausgerüstet. Meistens sind die Aufnahmen in Quererstreckung bzw. Tiefenrichtung der Seitenwand angeordnet. Auf diese Weise korrespondiert jede Aufnahme zu einer bestimmten Tiefenposition des Systemeinsatzes und folglich einer dazu gehörigen Beplankungsstärke. Eine einfache Anbringung und Montage der Profilleiste ist für den Fall gewährleistet, dass der Befestigungskopf elastisch federnd ausgebildet ist. Das heißt, der Befestigungskopf kann elastisch federnd seine Gestalt ändern.

Zu diesem Zweck setzt sich der Befestigungskopf nach vorteilhafter Ausgestaltung aus zwei oder mehr voneinander beabstandeten Kopfschenkeln zusammen. Die beiden Kopfschenkel mögen mit einem mittigen Spalt zueinander angeordnet sein und bilden zusammengenommen den Querschnitt des Befestigungskopfes. Der elastisch federnde Befestigungskopf ist also in der Lage, seine Gestalt zu ändern. Zu diesem Zweck weist der Befestigungskopf regelmäßig keine geschlossene Form auf, sondern ist vielmehr offen gestaltet. Selbstverständlich kann im Rahmen der Erfindung auch eine geschlossene, beispielsweise kugelförmige Gestalt des Befestigungskopfes verwirklicht werden.

Im Allgemeinen wird die elastische Federung im Rahmen der Erfindung jedoch durch eine räumlich offene Gestaltung des Befestigungskopfes realisiert, nämlich durch die zwei oder mehr voneinander beabstandeten Kopfschenkel und/ oder dadurch, dass der Befestigungskopf hohl ausgeführt ist. Die Kopfschenkel können ihren Abstand und/oder ihren Winkel zueinander elastisch federnd verändern, so dass sich der von den beiden Kopfschenkeln beschriebene Querschnitt des Befestigungskopfes insgesamt elastisch nachgebend ändert.

Auf diese Weise kann der Befestigungskopf an der Profilleiste in die Aufnahme an der Seitenwand eintauchen, wobei die Aufnahme den Befestigungskopf wenigstens teilweise umschließt. Die Vereinigung zwischen der Profilleiste und der Seitenwand mag im einfachsten Fall so geschehen, dass der Befestigungskopf in die Aufnahme eingeschoben oder eingeclipst wird. Aufgrund der meistens realisierten elastischen Federeigenschaften des Befestigungskopfes ist es natürlich auch möglich, diesen und damit die Profilleiste wieder aus der Aufnahme zu entfernen. Das heißt, bei Bedarf kann die zwischen der Profilleiste und der Seitenwand hergestellte Verbindung wieder gelöst werden.

Darüber hinaus liegt es im Rahmen der Erfindung und hat sich bewährt, wenn die Profilleiste mit dem Befestigungskopf in einer Einbauposition in die Aufnahme eingeführt und dann in eine Arbeitsposition verschwenkt und hierbei gleichzeitig gegenüber der Seitenwand fixiert wird. In der Einbauposition wird der Befestigungskopf in die zugehörige Aufnahme eingeführt und kann dann in die Arbeitsposition verschwenkt werden. Bei diesem Verschwenken in die Arbeitsposition wird die Profilleiste gleichzeitig gegenüber der Seitenwand fixiert. Dies geschieht durch das Zusammenspiel von Befestigungskopf und Aufnahme.

Tatsächlich erfährt die Profilleiste wenigstens in ihrer Arbeitsposition eine Fixierung gegenüber der Seitenwand, und zwar automatisch beim Wechsel von der Einbauposition in die Arbeitsposition. Dabei ist die Arbeitsposition regelmäßig senkrecht im Vergleich zur Einbauposition angeordnet.

Bei dem Befestigungskopf handelt es sich meistens um eine Befestigungskopfprofilierung, welche der Längserstreckung der zugehörigen Profilleiste folgt. Ebenso ist die Aufnahme als in Längserstreckung der zugehörigen Profilleiste verlaufende Aufnahmenut ausgestaltet. Dadurch ist es erforderlich, dass die Profilleiste mit ihrem Befestigungskopf bzw. ihrer Befestigungskopfprofilierung in die Aufnahme respektive Aufnahmenut der Seitenwand eingeschoben wird bzw. eingeschoben werden muss. Das heißt, die Einbauposition korrespondiert letztlich zur Einschubposition bzw. Einschublage der Profilleiste. Demzufolge gehört die Arbeitsposition zu einer Klemmlage. Sowohl die Einschublage als auch die Klemmlage korrespondieren zu einem bestimmten Winkel, den die Profilleiste gegenüber der Seitenwand einnimmt oder einnehmen muss.

Nach vorteilhafter Ausgestaltung ist der Befestigungskopf winklig an eine Basis angeschlossen. Die Dämmplatte liegt auf der Basis auf. Dabei mag die Dämmplatte mit üblichen Befestigungstechniken mit der Basis verbunden werden, beispielsweise adhäsiv und/oder schraubend bzw. unter Rückgriff auf andere Befestigungsmittel.

Bei den elektrischen Funktionselementen zur Anbringung in dem Systemeinsatz handelt es sich typischerweise um eine oder mehrere elektrische Leuchtenanordnungen. Grundsätzlich können aber auch andere Funktionselemente wie beispielsweise Heiz- und/oder Kühlelemente, Klimatisierungselemente, Luftführungselemente etc. in dem fraglichen Funktionseinsatz aufgenommen werden.

Das elektrische Funktionselement ist erfindungsgemäß mit einem Gehäuse ausgerüstet. Um im Innern des Gehäuses oftmals entstehende Wärme bzw. Verlustwärme abführen zu können, ist vorgesehen, dass das fragliche Gehäuse des elektrischen Funktionselementes mit dem Systemeinsatz wärmeleitend verbunden ist. Meistens liegen korrespondierende Seitenwände von einerseits dem Gehäuse des elektrischen Funktionselementes und andererseits die Seitenwände des Systemseinsatzes aneinander an, so dass es durch den mechanischen Kontakt zugleich zu der gewünschten Wärmeleitung kommt. Schlussendlich mag das elektrische Funktionselement selbstzentrierend in dem Systemeinsatz aufgenommen werden. Sobald also der Systemeinsatz bzw. die ihn tragende erfindungsgemäße Trockenbauwand installiert ist, kann das zur Aufnahme in dem Systemeinsatz vorgesehene elektrische Funktionselement unmittelbar eingesetzt werden. Das mag selbstzentrierend geschehen.

Im Ergebnis wird eine Trockenbauwand zur Verfügung gestellt, die sich flexibel an unterschiedliche Beplankungen und insbesondere wechselnde Beplankungsstärken anpassen lässt. Zu diesem Zweck kommen ein oder mehrere integrierte Systemeinsätze zum Einsatz, die mit den Dämmplatten verbunden werden. Dies geschieht unter Rückgriff auf ein oder mehrere in eine Aufnahme der Seitenwand des Systemeinsatzes eingreifende Profilleiste(n). Da in Tiefenrichtung des Systemeinsatzes bzw. in Querrichtung entlang der zugehörigen Seitenwand typischerweise mehrere Aufnahmen vorgesehen sind, lässt sich die Profilleiste variabel festlegen und können verschiedene Stärken der Beplankung realisiert werden.

Denn die eine oder die mehreren Dämmplatten liegen jeweils auf der in die Seitenwand eingreifenden Profilleiste auf. Hierdurch wird zugleich ein optisch einwandfreier äußerer Eindruck der Trockenbauwand zur Verfügung gestellt. Denn etwaige übergreifende Kanten des Systemeinsatzes sind im Rahmen der Erfindung ausdrücklich entbehrlich. Vielmehr wird zwischen der jeweiligen Seitenwand des Systemseinsatzes und der stumpf dagegen stoßenden Dämmplatte eine Schattenfuge definiert, die bedarfsweise mit Spachtelmasse oder einem anderen Füllmaterial ausgefüllt werden kann. Ein schlussendlich aufgebrachter Anstrich oder ein anderer Belag reicht erfindungsgemäß bis zum Kopf der jeweiligen Seitenwand des Systemeinsatzes, so dass der Systemeinsatz praktisch übergangsfrei in die Beplankung integriert ist. Hierin sind die wesentlichen Vorteile zu sehen.

Im Folgenden wird die Erfindung anhand einer lediglich ein Ausführungsbeispiel darstellenden Zeichnung näher erläutert:

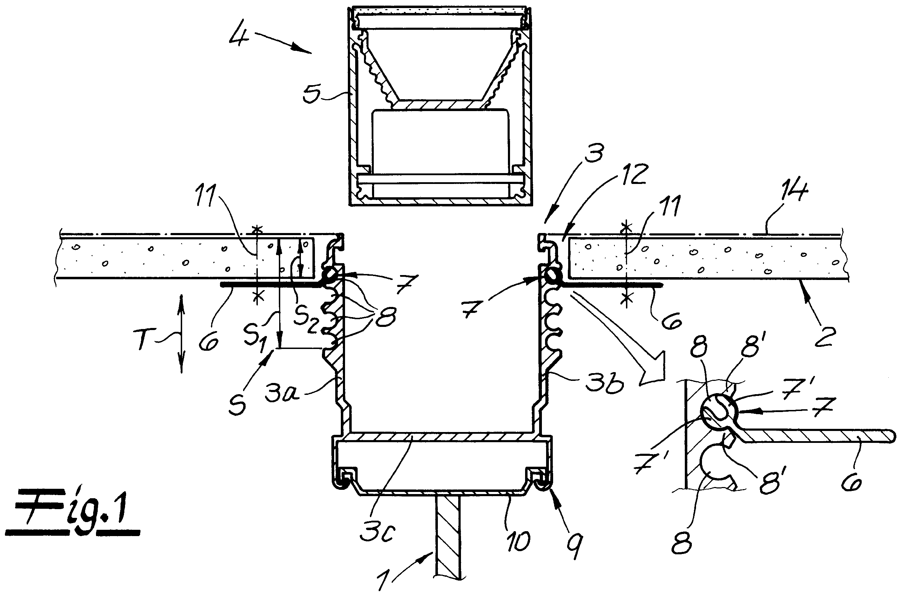

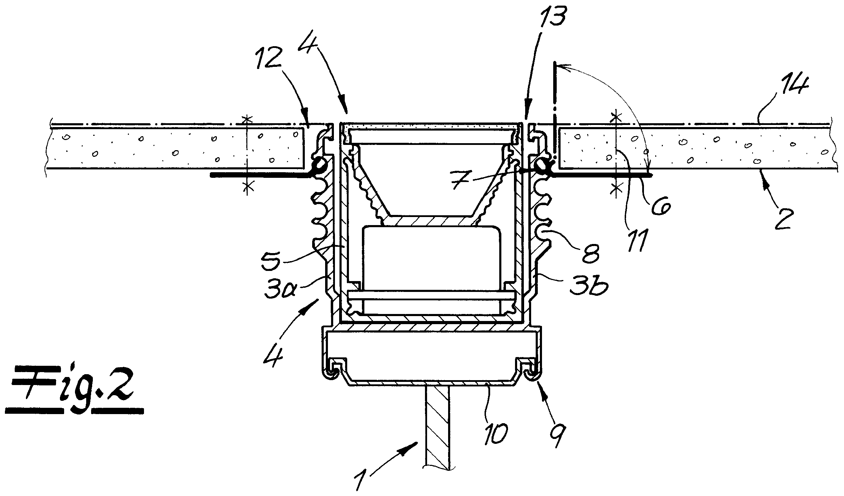

Die Fig. 1 und 2 zeigen eine erfindungsgemäße Trockenbauwand in verschiedenen Einbausituationen.

In den Figuren ist eine Trockenbauwand dargestellt, die zunächst einmal mit einer Rahmenkonstruktion 1 und einer daran oder darauf raumseitig angebrachten Beplankung 2 ausgerüstet ist. Bei der Beplankung 2 handelt es sich im Beispielfall um ein oder mehrere Dämmplatten 2, beispielsweise Gipskartonplatten, Gipsfaserplatten etc.. Die Beplankung 2 kann selbstverständlich und bei Bedarf feuerbeständig ausgelegt werden.

In die solchermaßen aufgebaute Trockenbauwand bzw. deren Beplankung 2 ist ein Systemeinsatz 3 integriert. Bei dem Systemeinsatz 3 handelt es sich nicht einschränkend um einen Systemkanal 3, welcher mit zwei sich gegenüberliegenden Seitenwänden 3a, 3b sowie einer Bodenwand 3c ausgerüstet ist und über einen insgesamt U-förmigen Querschnitt verfügt. Grundsätzlich ist die Bodenwand 3c auch entbehrlich. Die beiden Seitenwände 3a, 3b des Systemeinsatzes bzw. Systemkanals 3 liegen sich gegenüber.

Die beiden Seitenwände 3a, 3b und die Bodenwand 3c des Systemskanals 3 respektive des Systemeinsatzes 3 mögen insgesamt einstückig ausgelegt sein, wie dies im Beispielfall dargestellt ist. Selbstverständlich umfasst die Erfindung auch eine getrennte Auslegung der beiden Seitenwände 3a, 3b sowie der Bodenwand 3c. Jedenfalls ist der Systemeinsatz 3 insgesamt aus einem oder mehreren Profilen und insbesondere metallischen Strangpressprofilen aufgebaut. Im Ausführungsbeispiel handelt es sich um eine oder mehrere Aluminiumprofile.

Der in die Beplankung 2 integrierte Systemeinsatz 3 dient zur Aufnahme insbesondere elektrischer Funktionselemente 4. Bei dem Funktionselement 4 im gezeigten Beispielfall handelt es sich um eine elektrische Leuchtenanordnung 4. Das Funktionselement 4 ist mit einem Gehäuse 5 ausgerüstet.

Im eingebauten Zustand sind das Gehäuse 5 des elektrischen Funktionselementes 4 und der Systemeinsatz 3 wärmeleitend miteinander verbunden. Außerdem wird das elektrische Funktionselement 4 selbstzentrierend in dem Systemeinsatz 3 aufgenommen. Die Wärmeleitung zwischen dem Gehäuse 5 des elektrischen Funktionselementes 4 und dem Systemeinsatz 3 wird dadurch zur Verfügung gestellt, dass das fragliche Gehäuse 5 und der Systemeinsatz 3 dicht an dicht mechanisch aneinander anliegen. Dadurch wird etwaige und im Innern des Gehäuses 5 entstehende Verlustwärme dort eingebauter elektrischer und/oder elektronischer Komponenten per Wärmeleitung über den Systemeinsatz 3 abgeführt und schließlich in die Rahmenkonstruktion 1 eingeleitet.

Der Systemeinsatz 3 ist im Ausführungsbeispiel mit seinen beiden Seitenwänden 3a, 3b an zugehörige Dämmplatten 2 angeschlossen. Tatsächlich mag sich der in diesem Zusammenhang realisierte Systemkanal 3 entlang der gesamten Länge der dargestellten Trockenbauwand von einem zum anderen Ende hin erstrecken. Das ist selbstverständlich nur beispielhaft und nicht zwingend zu verstehen.

Für den Anschluss der einen oder der mehreren Dämmplatten 2 an die jeweilige Seitenwand 3a, 3b dient eine speziell ausgelegte Profilleiste 6, 7. Tatsächlich ist die jeweilige Dämmplatte 2 unter Zwischenschaltung der besagten Profilleiste 6, 7 an den Systemeinsatz 3 und hier insbesondere die jeweilige Seitenwand 3a, 3b angeschlossen. Das geschieht derart, dass die fragliche Profilleiste 6, 7 mit einem Befestigungskopf 7 in eine Aufnahme 8 der fraglichen Seitenwand 3a, 3b eingreift. Dabei kann insgesamt so vorgegangen werden wie dies in der WO 2009/098067 A1 beschrieben ist.

Tatsächlich verfügt die jeweilige Seitenwand 3a, 3b des Systemeinsatzes bzw. Systemskanals 3 im Ausführungsbeispiel über insgesamt vier Aufnahmen 8. Die einzelnen Aufnahmen 8 sind quer zur Längserstreckung der jeweiligen Seitenwand 3a, 3b übereinander in Tiefenrichtung T angeordnet. Tatsächlich erstreckt sich die jeweilige Seitenwand 3a, 3b senkrecht zur Zeichenebene in den Fig. 1 und 2. Die Tiefenrichtung T korrespondiert demgegenüber zu unterschiedlichen Einbautiefen der Profilleiste 6, 7 und folglich variierender Materialstärke der angeschlossenen Dämmplatten 2.

Diese verschiedenen Einbautiefen der Profilleiste 6, 7 resultieren daraus, dass sich die Profilleiste 6, 7 wahlweise in die zugehörige Aufnahme 8 einsetzen und hierin verankern lässt. Die Profilleiste 6, 7 ist insgesamt zweiteilig mit einem in die jeweilige Aufnahme 8 eingreifenden Befestigungskopf 7 und einer Basis 6 ausgerüstet. Auf der Basis 6 liegt die eine oder liegen die mehreren Dämmplatten 2 je nach gewünschter Beplankungsstärke S auf. Tatsächlich lassen sich erfindungsgemäß variable Beplankungsstärken S₁, S₂ der erfindungsgemäßen Trockenbauwand realisieren, indem die Profilleiste 6, 7 in der zugehörigen Aufnahme 8 an der jeweiligen Seitenwand 3a, 3b des Systemeinsatzes 3 verankert wird. Das deutet die Fig. 1 an.

Mit Hilfe der mehreren Aufnahmen 8 findet also eine positionsveränderliche Festlegung der Profilleiste 6, 7 an der zugehörigen Seitenwand 3a, 3b statt. Zur Vereinigung der Profilleiste 6, 7 mit der zugehörigen Seitenwand 3a, 3b mag der Befestigungskopf 7 elastisch federnd ausgebildet sein. Man erkennt, dass der Befestigungskopf 7 mit zwei Kopfschenkeln 7' ausgerüstet sind, die einen Abstand voneinander aufweisen. Die beiden Kopfschenkel 7' lassen sich in ihrem Abstand verändern, so dass die Profilleiste 6, 7 insgesamt in die Aufnahme 8 eingeclipst werden kann.

Alternativ oder zusätzlich ist es aber auch möglich, dass die Profilleiste 6, 7 mit ihrem Befestigungskopf 7 in die Aufnahme 8 zunächst in eine Einbauposition eingeführt und dann in eine Arbeitsposition verschwenkt wird. Das ist im rechten Teil der Fig. 2 dargestellt. Die Einbauposition korrespondiert zur strichpunktiert dargestellten (senkrechten) Lage der Profilleiste 6, 7, wohingegen die durchgezogen gezeichnete Stellung die (waagerechte) Arbeitsposition wiedergibt.

Man erkennt, dass die Profilleiste 6, 7 beim Wechsel von der (strichpunktiert dargestellten) Einbauposition in die (durchgezogen gezeichnete) Arbeitsposition in etwa um 90° verschwenkt wird bzw. verschwenkt werden muss. Bei diesem Vorgang wird der Befestigungskopf 7 in der Aufnahme 8 fixiert. Hierbei erfährt der Befestigungskopf 7 eine elastische Verformung und wird zugleich in der Aufnahme 8 verkeilt. Das kann durch einen nicht ausdrücklich dargestellten Nocken oder einen anderen Vorsprung an dem Befestigungskopf 7 erreicht werden, welcher beim Übergang von der Einbauposition in die Arbeitsposition in die Aufnahme 8 eintaucht und dafür sorgt, dass der Befestigungskopf 7 in der Aufnahme 8 fixiert bzw. verklemmt wird. Die Aufnahme 8 als solche ist mit zwei Aufnahmeschenkeln 8' ausgerüstet, welche zwischen sich eine Öffnung einschließen. Diese Öffnung fungiert als Einführspalt für den Befestigungskopf 7.

Das elektrische Funktionselement 4 mit dem Gehäuse 5 wird in Tiefenrichtung T in den Systemeinsatz bzw. Systemkanal 3 eingesteckt und kann in dem Systemkanal 3 durch übliche Verbindungsarten wie beispielsweise Verclipsen, Verschrauben etc. verankert werden. Bei diesem Vorgang wird zugleich der gewünschte wärmeleitende Kontakt zwischen dem Gehäuse 5 und dem Systemkanal 3 hergestellt. Außerdem ist es möglich, dass das elektrische Funktionselement 4 in komplett zusammengebautem Zustand in den Systemkanal 3 eingebaut wird. Ebenso ist aber auch ein sukzessiver Zusammenbau des elektrischen Funktionselementes im Innern des Systemkanals 3 denkbar und wird von der Erfindung umfasst.

Im Rahmen des Ausführungsbeispiels ist der Systemkanal 3 bzw. allgemein der Systemeinsatz 3 an die Rahmenkonstruktion 1 angeschlossen. Zu diesem Zweck weist der Systemeinsatz 3 ein angeschlossenes Profil 9 auf. Bei diesem Profil 9 handelt es sich um ein bei der Realisierung von Trockenbauwänden üblicherweise verwendetes C-Profil, welches für in der Regel senkrechte Metallständer der Rahmenkonstruktion 1 zum Einsatz kommt. Das fragliche Profil bzw. C-Profil 9 ist an den Systemeinsatz 3 angeschlossen. Tatsächlich formen das Profil 9 und die Bodenwand 3c des Systemeinsatzes 3 im Ausführungsbeispiel ein einstückiges Bauteil. Das ist selbstverständlich nicht zwingend. Genauso gut kann bei Bedarf auch auf das Profil 9 verzichtet werden.

Jedenfalls dient das Profil 9 im Rahmen des Ausführungsbeispiels dazu, den Systemeinsatz 3 mit der Rahmenkonstruktion 1 bzw. dem Metallständerwerk koppeln zu können. Zu diesem Zweck greift ein Anschlusselement 10 der Rahmenkonstruktion 1 in das Profil 9 ein und sorgt dafür, dass auf diese Weise die Rahmenkonstruktion 1 mit dem Systemeinsatz 3 und schließlich der Beplankung 2 verbunden wird. Denn die Beplankung 2 ist mit Hilfe von ein oder mehreren Befestigungsmitteln 11 jeweils an die Basis 6 der Profilleiste 6, 7 angeschlossen. Bei den Befestigungsmitteln 11 mag es sich im Beispielfall um Schrauben oder andere Befestigungsmittel handeln.

Schließlich ist von besonderer Bedeutung, dass der Systemeinsatz 3 mit den Seitenwänden 3a, 3b in etwa bündig in einer Ausnehmung 12 in der Beplankung 2 platziert ist. Tatsächlich sind eine kopfseitige Kante der jeweiligen Seitenwand 3a, 3b und die Oberseite der Beplankung 2 in etwa bündig zueinander angeordnet. Das geschieht kantenfrei, weil erfindungsgemäß keine die Beplankung 2 übergreifende Kante an dem Systemeinsatz 3 zu dessen Integration in die Beplankung 2 erforderlich ist.

Vielmehr sorgen hierfür im Beispielfall die beiden Profilleisten 6, 7, welche in Aufsicht auf die Trockenbauwand verdeckt von den jeweiligen Dämmplatten 2 angeordnet sind. Auf diese Weise lässt sich der Systemeinsatz 3 unter Definition einer Schattenfuge 13 zwischen der jeweiligen Seitenwand 3a, 3b und dem Gehäuse 5 in die Ausnehmung 12 einsetzen. Ein eventuell verbleibender Zwischenraum zwischen der Dämmplatte 2 und der Seitenwand 3a, 3b kann bei Bedarf mit einem Füllmaterial, beispielsweise Gips oder dergleichen aufgefüllt werden. Dann wird man einen optionalen Belag 14 bis randseitig an die jeweilige Seitenwand 3a, 3b heranführen bzw. heranführen können.

## Patentansprüche

1. Trockenbauwand, mit einer Beplankung (2) aus einer oder mehreren Dämmplatten (2) und wenigstens einem in diese Beplankung (2) integrierten Systemeinsatz (3) zur Aufnahme elektrischer Funktionselemente (4), und mit mindestens einem elektrischen Funktionselement (4), wobei
der Systemeinsatz (3) mit zumindest einer Seitenwand (3a, 3b) zum Anschluss der einen oder der mehreren Dämmplatten (2) ausgerüstet ist, wobei ferner der Systemeinsatz (3) eine Bodenwand (3c) aufweist, welche zum Anschluss an eine Rahmenkonstruktion (1) ausgebildet ist, und wobei
der Systemeinsatz (3) als Systemkanal (3) mit zwei sich gegenüberliegenden Seitenwänden (3a, 3b) ausgebildet ist,
**dadurch gekennzeichnet, dass**
die Dämmplatte (2) unter Zwischenschaltung einer mit einem Befestigungskopf (7) in eine Aufnahme (8) der Seitenwand (3a, 3b) eingreifenden Profilleiste (6, 7) an den Systemeinsatz (3) angeschlossen ist, wobei
das Funktionselement (4) ein Gehäuse (5) aufweist, welches mit dem Systemeinsatz (3) wärmeleitend dadurch verbunden ist, dass das Gehäuse (5) und der Systemeinsatz (3) dicht an dicht mechanisch aneinander anliegen.

2. Trockenbauwand nach Anspruch 1, **dadurch gekennzeichnet, dass** der Systemeinsatz (3) mit seiner Seitenwand (3a, 3b) in etwa bündig und kantenfrei in einer Ausnehmung (12) der Beplankung (2) platziert ist.

3. Trockenbauwand nach Anspruch 1 oder 2, **dadurch gekennzeichnet, dass** die Seitenwand (3a, 3b) mit mehreren Aufnahmen (8) zur positionsveränderlichen Festlegung der Profilleiste (6, 7) ausgerüstet ist.

4. Trockenbauwand nach Anspruch 3, **dadurch gekennzeichnet, dass** die Aufnahmen (8) in Tiefenrichtung (T) des Systemeinsatzes (3) angeordnet sind.

5. Trockenbauwand nach einem der Ansprüche 1 bis 4, **dadurch gekennzeichnet, dass** der Systemeinsatz (3) ein angeschlossenes Profil (9), insbesondere C-Profil (9), zur unmittelbaren Kopplung mit der Rahmenkonstruktion (1) aufweist.

6. Trockenbauwand nach Anspruch 5, **dadurch gekennzeichnet, dass** das Profil (9) an der Bodenwand (3c) des Systemeinsatzes (3) vorgesehen ist.

7. Trockenbauwand nach einem der Ansprüche 1 bis 6, **dadurch gekennzeichnet, dass** der Systemeinsatz (3) aus metallischen Profilen, insbesondere metallischen Strangpressprofilen und vorzugsweise Aluminiumprofilen aufgebaut ist.

8. Trockenbauwand nach einem der Ansprüche 1 bis 7, **dadurch gekennzeichnet, dass** der Befestigungskopf (7) der Profilleiste (6, 7) elastisch federnd ausgebildet ist.

9. Trockenbauwand nach einem der Ansprüche 1 bis 8, **dadurch gekennzeichnet, dass** die Profilleiste (6, 7) mit dem Befestigungskopf (7) in einer Einbauposition in die Aufnahme (8) eingeführt und dann in eine Arbeitsposition verschwenkt und hierbei gleichzeitig gegenüber der Seitenwand (3a, 3b) fixiert wird.

10. Trockenbauwand nach einem der Ansprüche 1 bis 9, **dadurch gekennzeichnet, dass** der Befestigungskopf (7) winklig an eine Basis (6) angeschlossen ist.

11. Trockenbauwand nach einem der Ansprüche 1 bis 10, **dadurch gekennzeichnet, dass** die eine oder die mehreren Dämmplatten (2) auf der Basis (6) aufliegen.

12. Trockenbauwand nach einem der Ansprüche 1 bis 11, **dadurch gekennzeichnet, dass** die Aufnahme (8) mit zwei Aufnahmeschenkeln (8') ausgerüstet ist, welche eine Öffnung zwischen sich einschließen und einen Einführspalt für den Befestigungskopf (7) definieren.

13. Trockenbauwand nach einem der Ansprüche 1 bis 12, **dadurch gekennzeichnet, dass** der Befestigungskopf (7) mit zwei beabstandeten Kopfschenkeln (7') ausgerüstet ist.

14. Trockenbauwand nach einem der Ansprüche 1 bis 13, **dadurch gekennzeichnet, dass** es sich bei den elektrischen Funktionselementen (4) um eine oder mehrere elektrische Leuchtenanordnungen (4) handeln.

15. Trockenbauwand nach einem der Ansprüche 1 bis 14, **dadurch gekennzeichnet, dass** das elektrische Funktionselement (4) selbstzentrierend in dem Systemeinsatz (3) aufgenommen ist.

## Claims

1. Plasterboard with cladding (2) made of one or more insulating panels (2) and at least one systems insert (3) for accommodating electrical functional elements (4) integrated into this cladding (2), and with at least one electrical functional element (4), wherein
the systems insert (3) is equipped with at least one side wall (3a, 3b) for connecting one of the plurality of insulating panels (2), wherein further the systems insert (3) comprises a base wall (3c) which is designed for connection to a framework structure (1) and wherein
the systems insert (3) is designed as a systems channel (3) with two opposite side walls (3a, 3b),
**characterised in that**
the insulating panel (2) is connected to the systems insert (3) with the interposition of a profile strip (6, 7) engaging in a recess (8) of the side wall (3a, 3b) with a fastening head (7), wherein
the functional element (4) has a housing (5) which is connected to the systems insert (3) in a thermally conducting manner **in that** the housing (5) and the systems insert (3) are in close mechanical contact with each other.

2. Plasterboard wall according to claim 1 **characterised in that** the systems insert (3) is placed with its side wall (3a, 3b) in a recess (12) of the cladding (2) in an approximately flush and edge-free manner.

3. Plasterboard wall according to claim 1 or 2 **characterised in that** the side wall (3a, 3b) is provided with several recesses (8) for fixing the profile strip (6, 7) in a position-variable manner.

4. Plasterboard wall according to claim 3 **characterised in that** the recesses (8) are arranged in the depth direction (T) of the systems insert (3).

5. Plasterboard wall according to any one of claims 1 to 4 **characterised in that** the systems insert (3) comprises a connected profile (9), in particular a C-profile(9) for direct connection to the framework structure (1).

6. Plasterboard wall according to claim 5 **characterised in that** the profile (9) is provided on the base wall (3c) of the systems insert (3).

7. Plasterboard wall according to any one of claims 1 to 6 **characterised in that** the systems insert (3) is constructed of metallic profiles, in particular metallic extruded profiles and preferably aluminium profiles.

8. Plasterboard wall according to any one of claims 1 to 7 **characterised in that** the fastening head (7) of the profile strip (6, 7) is spring-loaded.

9. Plasterboard wall according to any one of claims 1 to 8 **characterised in that** the profile strip (6, 7) is inserted with the fastening head (7) in an assembly position into the recess (8) and is then swivelled into an operating position while simultaneously being fixed relative to the side wall (3a, 3b).

10. Plasterboard wall according to any one of claims 1 to 9 **characterised in that** the fastening head (7) is connected to a base (6) at an angle.

11. Plasterboard wall according to any one of claims 1 to 10 **characterised in that** the one or more insulating panels (2) lie on the base (6).

12. Plasterboard wall according to any one of claims 1 to 11 **characterised in that** the recess (8) is provided with two receiving arms (8') which enclose an opening between them and define an insertion gap for the fastening head (7).

13. Plasterboard according to any one of claims 1 to 12 **characterised in that** the fastening head (7) is provided with two spaced head arms (7').

14. Plasterboard according to any one of claims 1 to 13 **characterised in that** the electrical functional elements (4) are one or more electrical light assembles (4).

15. Plasterboard according to any one of claims 1 to 14 **characterised in that** the electrical functional elements (4) are accommodated in the systems insert (3) in a self-centring manner.

## Revendications

1. Cloison sèche comprenant au moins un habillage (2) constitué d'un ou de plusieurs panneaux isolants (2) et au moins un insert de système (3) intégré dans cet habillage (2) pour la réception d'éléments fonctionnels électriques (4), et au moins un élément fonctionnel électrique (4), dans laquelle
- l'insert de système (3) est équipé d'au moins une paroi latérale (3a, 3b) pour le raccordement d'un ou de plusieurs panneaux isolants (2), et dans laquelle
- l'insert de système (3) comporte une paroi de fond (3c) conçue pour le raccordement d'une structure de cadre (1), et dans laquelle
- l'insert de système (3) est conçu comme un canal de système (3) avec deux parois latérales (3a, 3b) opposées,
**caractérisée en ce que**
- le panneau isolant (2) est raccordé à l'insert de système (3) par l'intermédiaire d'une baguette profilée (6, 7) s'engageant dans une admission (8) de la paroi latérale (3a, 3b) avec une tête de fixation (7), dans laquelle
- l'élément fonctionnel électrique (4) comporte un boîtier (5) relié à l'insert de système (3) du fait que le boîtier (5) et l'insert de système (3) sont appliqués mécaniquement et étroitement l'un contre l'autre.

2. Cloison sèche selon la revendication 1, **caractérisée en ce que** l'insert de système (3) est placé avec sa paroi latérale (3a, 3b) dans une admission (12) de l'habillage (2) pratiquement en affleurement et sans arête.

3. Cloison sèche selon la revendication 1 ou 2, **caractérisée en ce que** la paroi latérale (3a, 3b) est équipée de plusieurs admissions (8) pour la fixation modifiable en position de la baguette profilée (6, 7).

4. Cloison sèche selon la revendication 3, **caractérisée en ce que** les admissions (8) sont disposées dans le sens de la profondeur (T) de l'insert de système (3).

5. Cloison sèche selon l'une des revendications 1 à 4, **caractérisée en ce que** l'insert de système (3) comporte un profilé (9) raccordé à celui-ci, en particulier un profilé en C (9), pour l'accouplement direct avec la structure de cadre (1).

6. Cloison sèche selon la revendication 5, **caractérisée en ce que** le profilé (9) est prévu sur la paroi de fond (3c) de l'insert de système (3).

7. Cloison sèche selon l'une des revendications 1 à 6, **caractérisée en ce que** l'insert de système (3) est constitué de profilés métalliques, en particulier de profilés métalliques extrudés et de préférence de profilés en aluminium.

8. Cloison sèche selon l'une des revendications 1 à 7, **caractérisée en ce que** la tête de fixation (7) de la baguette profilée (6, 7) est conçue de façon élastique.

9. Cloison sèche selon l'une des revendications 1 à 8, **caractérisée en ce que** la baguette profilée (6, 7) est insérée dans l'admission (8) dans une position de montage avec la tête de fixation (7), puis basculée dans une position de travail et ainsi fixée simultanément par rapport à la paroi latérale (3a, 3b).

10. Cloison sèche selon l'une des revendications 1 à 9, **caractérisée en ce que** la tête de fixation (7) est raccordée à une base (6) sous un angle.

11. Cloison sèche selon l'une des revendications 1 à 10, **caractérisée en ce que** les un ou plusieurs panneaux isolants (2) reposent sur la base (6).

12. Cloison sèche selon l'une des revendications 1 à 11, **caractérisée en ce que** l'admission (8) est équipée de deux branches d'admission (8'), lesquelles forment une ouverture entre elles et définissent une fente d'insertion pour la tête de fixation (7).

13. Cloison sèche selon l'une des revendications 1 à 12, **caractérisée en ce que** la tête de fixation (7) est équipée de deux branches de tête (7') espacées.

14. Cloison sèche selon l'une des revendications 1 à 13, **caractérisée en ce que** les éléments fonctionnels électriques (4) consistent en un ou plusieurs ensembles de lampes électriques (4).

15. Cloison sèche selon l'une des revendications 1 à 14, **caractérisée en ce que** l'élément fonctionnel électrique (4) est reçu dans l'insert de système (3) de manière automatiquement centrée.
